# EUROPÄISCHE PATENTSCHRIFT

(11) **EP 2 051 892 B1**
(45) Veröffentlichungstag und Bekanntmachung des Hinweises auf die Patenterteilung: **31.10.2018**
(21) Anmeldenummer: 07764906.9
(22) Anmeldetag: 28.06.2007
(51) Int. Cl.: B60T 17/00

(54) **DRUCKLUFTVERSORGUNGSEINRICHTUNG FÜR EIN NUTZFAHRZEUG UND LUFTTROCKNERPATRONE**
COMPRESSED AIR SUPPLY DEVICE FOR A UTILITY VEHICLE AND AIR DRYER CARTRIDGE
DISPOSITIF D'ALIMENTATION EN AIR COMPRIMÉ POUR UN VÉHICULE UTILITAIRE ET CARTOUCHE DE DESSICCATEUR

(30) Priorität: 08.08.2006 DE 102006037307
(43) Veröffentlichungstag der Anmeldung: 29.04.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2007/005716
(87) Internationale Veröffentlichungsnummer: WO 2008/017352

(56) Entgegenhaltungen:
- EP-A- 0 608 606
- EP-A- 1 048 540
- EP-A- 1 495 934
- WO-A-00/26074
- WO-A-01/26783
- WO-A-95/07831
- DE-A1- 19 721 230
- US-A- 5 286 283
- US-A- 5 792 245

## Beschreibung

Die Erfindung betrifft eine Druckluftversorgungseinrichtung für ein Nutzfahrzeug, gemäß dem Oberbegriff von Anspruch 1.

Die Erfindung betrifft weiterhin eine Lufttrocknerpatrone gemäß dem Oberbegriff von Anspruch 10.

Eine gattungsgemäße Druckluftversorgungseinrichtung und Lufttrocknerpatrone sind beispielsweise aus der DE 197 21 230 A1 bekannt.

Derartige Druckluftversorgungseinrichtungen beliefern Druckluftverbraucher in Nutzfahrzeugen mit aufbereiteter Druckluft. Typische Druckluftverbraucher sind beispielsweise ein pneumatisches Bremssystem oder eine Luftfederung. Eine Druckluftversorgungseinrichtung vereinigt zahlreiche Funktionen. Eine wichtige Aufgabe besteht in der Trocknung und Reinigung der Luft. Zu diesem Zweck ist eine Lufttrocknerpatrone vorgesehen, die Filtereinrichtungen und ein Trockenmittel enthält. Andere wichtige Aufgaben bestehen in der Druckregelung der von einem Kompressor gelieferten Druckluft sowie in der sicheren Verteilung der Druckluft auf die verschiedenen Verbraucherkreise. Diese Aufgaben werden durch Ventileinrichtungen, die in einem Ventilgehäuse untergebracht sind, übernommen, nämlich einem Druckregler und einem Mehrkreisschutzventil. Moderne Druckluftversorgungseinrichtungen enthalten zusätzlich zu den pneumatischen Komponenten eine elektronische Steuerung sowie elektrisch ansteuerbare Komponenten, beispielsweise Magnetventile, und eine mit der elektronischen Steuerung in Verbindung stehende Sensorik. Die so ausgestatteten Druckluftversorgungseinrichtungen werden auch als EAC (Electronic Air Control) bezeichnet.

Allgemein ist man bestrebt, die Lufttrocknung möglichst effektiv und effizient zu gestalten, wobei dies insbesondere eine gute Ausnutzung des in der Lufttrocknerpatrone zur Verfügung stehenden Volumens voraussetzt.

Die gattungsgemäße Druckluftversorgungseinrichtung sowie der gattungsgemäße Lufttrockner stellen sicher, dass das Trockenmittel zu jedem Zeitpunkt das Trocknervolumen vollständig ausfüllt und dicht gepackt ist.

Vorteilhafte Ausführungsformen der Erfindung sind in den abhängigen Ansprüchen angegeben.

Bei der gattungsgemäßen Druckluftversorgungseinrichtung ist vorgesehen, dass in dem Gehäuse der Lufttrocknerpatrone eine mit Trockenmittel gefüllte Trockenmittelbox angeordnet ist und dass das Trockenmittel durch eine elastische Einrichtung komprimierbar ist. Die elastische Einrichtung stellt sicher, dass das als Granulat vorliegende Trockenmittel stets dicht gepackt ist, so dass die zu trocknende Luft die trocknende Wirkung des Granulats in optimaler Weise erfährt. Auch bei betriebsbedingten Volumenschwankungen des Trockenmittels sorgt die elastische Einrichtung dafür, dass die dichte Packung erhalten bleibt.

Bei einer nicht beanspruchten Druckluftversorgungseinrichtung kann vorgesehen sein, dass die elastische Einrichtung eine sich an dem Ventilgehäuse abstützende Feder ist, welche die Trockenmittelbox in die Lufttrocknerpatrone hineintreibt.

Bei einer nicht beanspruchten Druckluftversorgungseinrichtung kann vorgesehen sein, dass die elastische Einrichtung eine an der Trockenmittelbox befestigte Federeinrichtung ist, die eine Kompressionseinrichtung in die Trockenmittelbox hineintreibt.

Erfindungsgemäß ist vorgesehen, dass die elastische Einrichtung durch mehrere an der Trockenmittelbox befestigte Federelemente realisiert ist, welche sich an einem Gehäuse der Lufttrocknerpatrone abstützen und die Trockenmittelbox in die Lufttrocknerpatrone hineintreiben.

Gemäß einer besonders bevorzugten Ausführungsform der vorliegenden Erfindung ist vorgesehen, dass die Trockenmittelbox eine Basis aufeist, an der ein äußeres Rohrstück und ein inneres Rohrstück angeordnet sind, die an ihrer der Basis abgewandten Seite offen sind, und dass zwischen dem äußeren Rohrstück und dem inneren Rohrstück ein weiteres Rohrstück angeordnet ist, welches an seiner der Basis zugewandten Seite offen und durch die elastische Einrichtung relativ zu der Trockenmittelbox in axiale Richtung verschiebbar ist. Von außen zum Zentrum der Lufttrocknerpatrone liegen somit vier aufeinander folgende Wandungen vor, nämlich gebildet durch das Gehäuse der Lufttrocknerpatrone, das äußere Rohrstück der Trockenmittelbox, das weitere Rohrstück und das innere Rohrstück der Trockenmittelbox.

Hierdurch ist verwirklicht, dass das Gehäuse der Lufttrocknerpatrone, das äußere Rohrstück, das weitere Rohrstück und das innere Rohrstück ein Labyrinth bilden, das von zu trocknender Druckluft unter dreifacher Umkehr der Strömungsrichtung durchströmbar ist. Durch diese labyrinthartige Gestalt wird der Luftweg durch das Trockenmittel verlängert. Hierdurch kann die Trockenwirkung der Lufttrocknerpatrone verbessert werden, beziehungsweise es kann bei unveränderter Trockenwirkung eine Lufttrocknerpatrone mit geringerer Bauhöhe realisiert werden.

Gemäß einer Ausführungsform der vorliegenden Erfindung ist vorgesehen, dass das weitere Rohrstück an dem Gehäuse der Lufttrocknerpatrone befestigt ist. Diese Befestigung kann beispielsweise durch Punktschweißen verwirklicht sein, wobei die Verbindung zwischen dem weiteren Rohrstück und der Lufttrocknerpatrone durch eine Dichtung abgedichtet ist, um so den Luftweg durch das Labyrinth zuverlässig zu definieren. Die Dichtung kann beispielsweise in Form eines aushärtenden Materials vorliegen.

Gemäß einer weiteren Ausführungsform der vorliegenden Erfindung ist vorgesehen, dass das weitere Rohrstück an der Kompressionseinrichtung befestigt ist. Die von einer Feder mit Kraft beaufschlagte Kompressionseinrichtung wird somit zusammen mit dem weiteren Rohrstück in die Trockenmittelbox hinein getrieben, um so die erwünschte Kompressionswirkung des Granulats bereitzustellen.

Gemäß einer weiteren Ausführungsform der vorliegenden Erfindung ist vorgesehen, dass die Trockenmittelbox eine Basis aufweist, an dem ein Rohrstück angeordnet ist, das an seiner der Basis abgewandten Seite offen ist, und dass die Kompressionseinrichtung innerhalb des Rohrstückes angeordnet und durch die elastische Einrichtung relativ zu der Trockenmittelbox in axiale Richtung verschiebbar ist. Bei einer solchen Anordnung durchströmt die zu trocknende Luft zunächst den Bereich zwischen dem Rohrstück und dem Gehäuse der Lufttrocknerpatrone, um dann nach Strömungsumkehr zentral die Trockenmittelbox zu durchströmen und dann aus dieser auszuströmen.

Es kann vorgesehen sein, dass die Trockenmittelbox mit dem Ventilgehäuse über eine radiale Dichtung abdichtend zusammenwirkt. Dies ist insbesondere bei so genannten offenen Systemen nützlich, bei denen die Lufttrocknerpatrone direkt am Ventilgehäuse abdichtet.

Bei geschlossenen Systemen, bei denen ein Fußflansch gegen das Ventilgehäuse abdichtet, ist vorgesehen, dass die Trockenmittelbox mit einem Fußflansch der Lufttrocknerpatrone über eine radiale Dichtung abdichtend zusammenwirkt.

Weiterhin ist nützlicherweise vorgesehen, dass die Trockenmittelbox mit dem Gehäuse der Lufttrocknerpatrone über eine eine axiale Relativbewegung von Trockenmittelbox und Gehäuse zulassende Rasteinrichtung verbunden ist. Die Zulasung der axialen Bewegung ermöglicht die relative Verschiebung der das Grantulat aufnehmenden Komponeten zum Zwecke von deren Kompression.

Die Erfindung betrifft weiterhin eine Lufttrocknerpatrone, für den Einsatz in einer erfindungsgemäßen Druckluftversorgungseinrichtung.

Die Erfindung wird nun mit Bezug auf die begleitenden Zeichnungen anhand besonders bevorzugter,Ausführungsformen beispielhaft erläutert.

Es zeigen:
- Figur 1: eine Ausführungsform einer Druckluftversorgungseinrichtung in geschnittener Darstellung;
- Figur 2: eine Ausführungsform einer Druckluftversorgungseinrichtung in geschnittener Explosionsdarstellung;
- Figur 3: eine Schnittansicht eines Teils einer Druckluftversorgungseinrichtung mit einem Sicherungselement;
- Figur 4: eine perspektivische Darstellung eines Außenbajonettrings;
- Figur 5: eine Draufsicht eines Außenbajonettrings;
- Figur 6: eine Ausführungsform einer Druckluftversorgungseinrichtung in geschnittener Darstellung;
- Figur 7: eine perspektivische Darstellung eines Innenbajonettrings;
- Figur 8: eine Draufsicht eines Innenbajonettrings;
- Figur 9: eine Ausführungsform einer Druckluftversorgungseinrichtung in geschnittener Darstellung;
- Figur 10: eine perspektivische Darstellung einer Lufttrocknerpatrone mit Fußflansch und Innenbajonettring;
- Figur 11: eine perspektivische Darstellung eines Innenbajonettrings mit Fußflanschfunktion;
- Figur 12: eine Schnittansicht eines Teils einer erfindungsgemäßen Druckluftversorgungseinrichtung zur Erläuterung einer ersten Montageart eines Fußflansches;
- Figur 13: eine Schnittansicht eines Teils einer erfindungsgemäßen Druckluftversorgungseinrichtung zur Erläuterung einer zweiten Montageart eines Fußflansches;
- Figur 14: einen Teil einer erfindungsgemäßen Druckluftversorgungseinrichtung in geschnittener Darstellung;
- Figur 15: einen Teil einer Trockenmittelbox in perspektivischer Darstellung;
- Figur 16: eine perspektivische geschnittene Darstellung eines Teils einer Lufttrocknerpatrone und
- Figur 17: eine Trockenmittelbox in perspektivischer Darstellung.

Bei der nachfolgenden Beschreibung der Zeichnungen bezeichnen gleiche Bezugszeichen gleiche oder vergleichbare Komponenten.

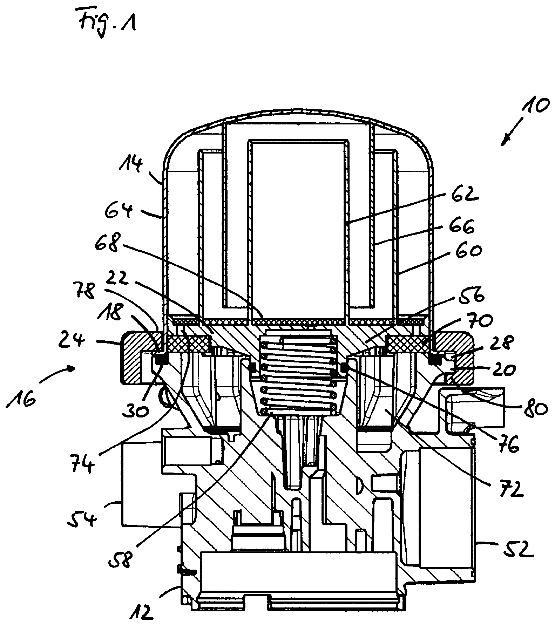

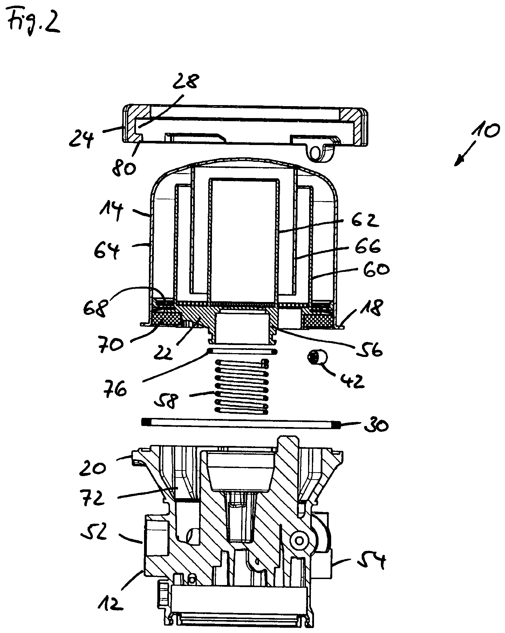

Figur 1 zeigt eine Ausführungsform einer Druckluftversorgungseinrichtung in geschnittener Darstellung. Figur 2 zeigt eine Ausführungsform einer Druckluftversorgungseinrichtung in geschnittener Explosionsdarstellung. Die Druckluftversorgungseinrichtung 10 weist ein Ventilgehäuse 12 und eine Lufttrocknerpatrone 14 auf.

Das Ventilgehäuse 12 hat einen Eingang 52, an dem ein Kompressor anschließbar ist und über den aufzubereitende Druckluft einströmen kann. Weiterhin ist ein Ausgang 54 zur Weiterleitung der aufbereiteten Druckluft vorgesehen.

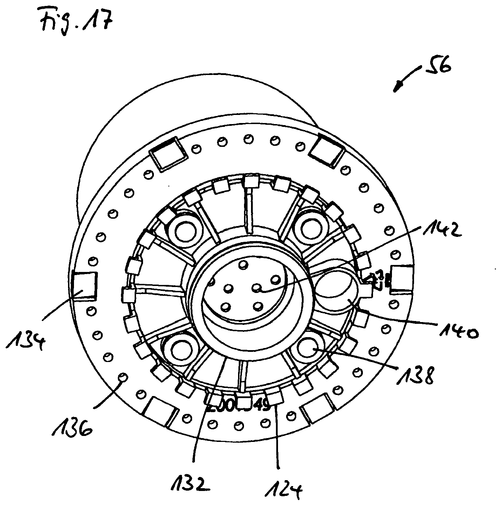

In der Lufttrocknerpatrone 14 ist eine vorzugsweise aus Kunststoff bestehende Trockenmittelbox 56 angeordnet, die in das Ventilgehäuse 12 hineinragt und an diesem über eine Feder 58 abgestützt ist. Die Trockenmittelbox 56 umfasst eine Basis 22, ein äußeres Rohrstück 60 und ein inneres Rohrstück 62, die sich in die Lufttrocknerpatrone 14 hinein erstrecken. Zwischen den Rohrstücken 60, 62 ist ein am Gehäuse 64 der Lufttrocknerpatrone 14 befestigtes, vorzugsweise aus Metall bestehendes weiteres Rohrstück 66 angeordnet, welches in Richtung des Ventilgehäuses 12 offen ist, während die Rohrstücke 60, 62 der Trockenmittelbox 56 in die entgegensetzte Richtung geöffnet sind. Die Verbindung des Rohrstückes 66 mit dem Gehäuse 64 kann nützlicherweise durch Punktschweißen erfolgen, wobei eine zusätzliche Abdichtung vorgesehen ist, beispielsweise durch aushärtendes Material. Durch die so ineinander angeordneten Rohrstücke 60, 62, 66 sowie das Gehäuse 64 wird ein Labyrinth gebildet, das vollständig mit Granulat zum Trocknen der das Labyrinth durchströmenden Druckluft gefüllt ist. Die dichte Packung des Trockenmittels in der Lufttrocknerpatrone 14 wird durch die von der Feder 58 vermittelte Kraft aufgebracht, welche die Trockenmittelbox 56 in die Lufttrocknerpatrone 14 hineintreibt. Der von Trockenmittel erfüllte Raum ist in Richtung des Ventilgehäuses 12 zumindest teilweise durch Filtervlies 68 begrenzt, wobei die einzelnen durch die Rohrstücke 60, 62, 66 abgegrenzten Bereiche des Filtervlieses 68 aus identischen oder verschiedenen Materialien bestehen können. Insbesondere der äußere Bereich des Filtervlieses 68 zwischen dem Rohrstück 60 und dem Gehäuse 64 der Lufttrocknerpatrone 14 und der zentrale Bereich des Filtervlieses 68 innerhalb des inneren Rohrstückes 62 sind als Staubfilter ausgelegt, während der zwischen dem äußeren Rohrstück 60 und dem inneren Rohrstück 62 angeordnete Vliesbereich für die Aufnahme und bedarfsweise Abgabe von Fremdstoffen ausgelegt ist, die über Rückschlagventile (siehe Figur 17) aus der Trockenmittelbox 56 austreten können. Im Bereich der unteren Begrenzung der Lufttrocknerpatrone 14 ist weiterhin ein Vorfilter 70 angeordnet, der optional die Eigenschaften eines Koaleszenzfilters aufweisen kann. Der Vorfilter 70 dient insbesondere der Reinigung der Druckluft im Hinblick auf Kompressoröl und vergleichbare Verschmutzungen.

In das Ventilgehäuse 12 über den Eingang 52 einströmende Druckluft wird über Kanäle im Ventilgehäuse 12 verteilt, um dann über den Kanal 72 den Vorfilter 70 anzuströmen und durch diesen hindurch zu treten. Im Anschluss daran strömt die Druckluft durch den Kanal 74 und nachfolgend durch den Filtervlies 68 in das dichtgepackte Trockenmittel ein. Die Luft strömt in der Lufttrocknerpatrone bis über das offene Ende des äußeren Rohrstückes 60 der Trockenmittelbox 56 hinaus, und sie wird dann umgelenkt, um zwischen dem äußeren Rohrstück 60 und dem am Gehäuse 64 des Lufttrockners befestigten Rohrstück 66 wieder in Richtung Ventilgehäuse 12 zu strömen. Nachdem die Druckluft das offene Ende des Rohrstückes 60 passiert hat, wird diese wiederum umgelenkt, um nachfolgend zwischen dem am Gehäuse 64 der Lufttrocknerpatrone 14 befestigten Rohrstück 66 und dem inneren Rohrstück 62 sowie über das Ende dieses Rohrstückes 62 hinaus zu strömen. Dort wird die Luft wiederum umgelenkt, um dann zentral durch das innere Rohrstück 62 und den Filtervlies 68 aus der Lufttrocknerpatrone 14 und der Trockenmittelbox 56 wieder in das Ventilgehäuse 12 einzuströmen. Die Luft wird in dem Ventilgehäuse 12 über Kanäle gesammelt und ist dann über den Ausgang 54 entnehmbar.

Um die so geschilderte Luftführung zu ermöglichen, ist eine Abdichtung der Trockenmittelbox 56 gegen das Ventilgehäuse 12 mittels einer Dichtung 76 erforderlich, die hier als radial wirkende Dichtung, insbesondere als O-Ring ausgebildet ist. Weiterhin ist eine axial wirkende Dichtung 30 vorgesehen, die einen Kragen 18 des Gehäuses 64 der Lufttrocknerpatrone 14 gegen das Ventilgehäuse 12 abdichtet. Um die für die Abdichtung erforderliche Kompression der Dichtung 30 zur Verfügung zu stellen, ist ein Bajonettverschluss 16 vorgesehen, der das Ventilgehäuse 12 und die Lufttrocknerpatrone 14 zusammenhält. Der Bajonettverschluss 16 umfasst einen Außenbajonettring 26 mit inneren abschnittsweise gebildeten Ausnehmungen 28, die durch Vorsprünge 80 und einen in Umfangsrichtung durchgehenden Kragen 78 gebildet sind. Diese inneren Ausnehmungen 28 sind geeignet, Kragenabschnitte 20 des Ventilgehäuses 12 aufzunehmen und mit diesen über jeweils abgeschrägte Flächen durch Verdrehen des Außenbajonettrings 24 gegen das Ventilgehäuse 12 eine axiale Kraft aufzubringen, welche den Kragen 18 der Lufttrocknerpatrone 14 über die Dichtung 30 gegen das Ventilgehäuse 12 presst. Der in Umfangsrichtung durchgehende Kragen 78 des Außenbajonettrings 24 wirkt somit mit dem in Umfangrichtung durchgehenden Kragen 18 der Lufttrocknerpatrone 14 zusammen, während die Kragenabschnitte 20 des Ventilgehäuses mit den Vorsprüngen 80 des Außenbajonettrings 24 über deren geneigte Flächen zusammenwirken und somit bei relativer Drehung die Charakteristik eines Bajonettverschlusses zu Verfügung stellen. In der Explosionsdarstellung gemäß Figur 2 ist weiterhin ein Sicherungselement zu erkennen, das mit Bezug auf die nachfolgende Figur näher erläutert wird.

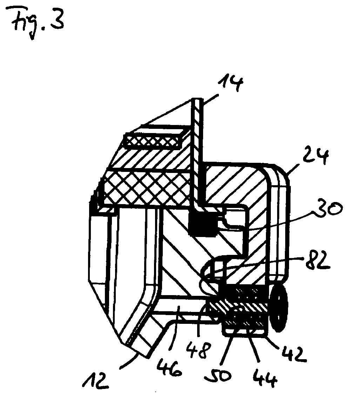

Figur 3 zeigt eine Schnittansicht eines Teils einer Druckluftversorgungseinrichtung mit einem Sicherungselement. Das Sicherungselement 42 sitzt in einer Öffnung 44 des Außenbajonettrings 24 und ist mit diesem dort fest verbunden. In dem in Figur 3 dargestellten Zustand dringt eine Nase 48 des Sicherungselementes 42 in eine Öffnung 46 des Ventilgehäuses ein, die mit den Druckluftführungen im Ventilgehäuse 12 in Verbindung steht. Die Nase 48 des Sicherungselements 42 trägt eine Dichtung 82,
so dass im dargestellten Zustand ein Abströmen von Druckluft verhindert wird. Soll der Außenbajonettring 24 zum Öffnen des Bajonettverschlusses 16 gegen das Ventilgehäuses 12 verdreht werden, so ist es zunächst erforderlich, das Sicherungselement 42 aus der Öffnung 46 gegen die Kraft einer Feder 50 nach außen zu ziehen. Nach Freigabe der Öffnung 46 kann dann die Druckluft aus dem System abströmen; gleichzeitig ist die Drehbewegung des Außenbajonettrings 24 gegen das Ventilgehäuse 12 freigegeben. Beim Schließen des Bajonettverschlusses 16 wird der Außenbajonettring 24 so lange gegen das Ventilgehäuse 12 in Schließrichtung gedreht, bis die Nase 48 wieder in die Öffnung 46 einrastet und diese abdichtet. Ist das Einrasten hörbar, so liegt gleichzeitig für den Fahrer eine Bestätigung für die korrekten Montage der Druckluftversorgungseinrichtung 10 vor. Da eine Öffnung 46 zum Abströmen von Druckluft nur an einer Umfangsposition des Ventilgehäuses 12 vorhanden sein wird, ist sicherzustellen, dass der Außenbajonettring 24 nur in genau einer Position über die miteinander zu verbindenden Krägen geführt werden kann, beispielsweise durch mechanische Führungen, damit beim Schließen dann auch das Sicherungselement 42 und die Öffnung 46 aufeinander treffen.

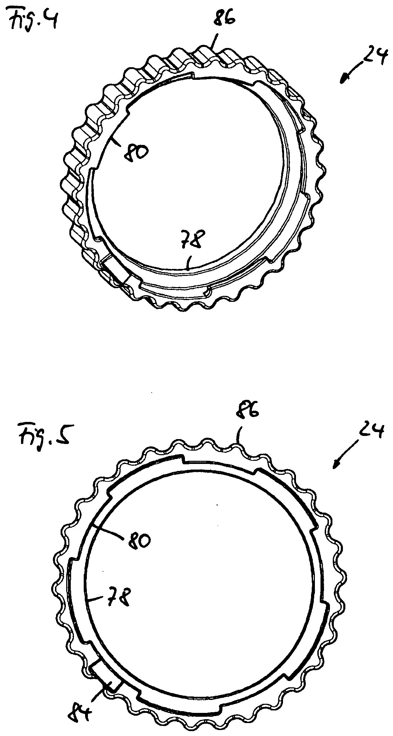

Figur 4 zeigt eine perspektivische Darstellung eines Außenbajonettrings. Figur 5 zeigt eine Draufsicht eines Außenbajonettrings. Der Außenbajonettring hat an seiner Außenseite eine gewellte Oberfläche 86, was die Handhabbarkeit beim Schließen und Öffnen verbessert. An der Innenseite des Außenbajonettrings 24 sind der vorspringende Kragen 78, der auf dem Kragen 18 der Lufttrocknerpatrone 14 zu liegen kommt, sowie die Vorsprünge 80 erkennbar, die mit den Abschnitten 20 des Ventilgehäuses zusammenwirken. Weiterhin ist der Sicherungselementhalter 84 erkennbar. In Figur 4 ist erkennbar, dass die Vorsprünge 80 von einem Endbereich zum anderen in ihrer Dicke zunehmen, wobei zusätzlich noch eine stärkere Anlaufschräge am dünneren Endbereich vorgesehen ist. Die Anlaufschräge kann beispielsweise eine Neigung von 30° haben, während die nachfolgende Fläche eine Steigung von beispielsweise 1,5° hat.

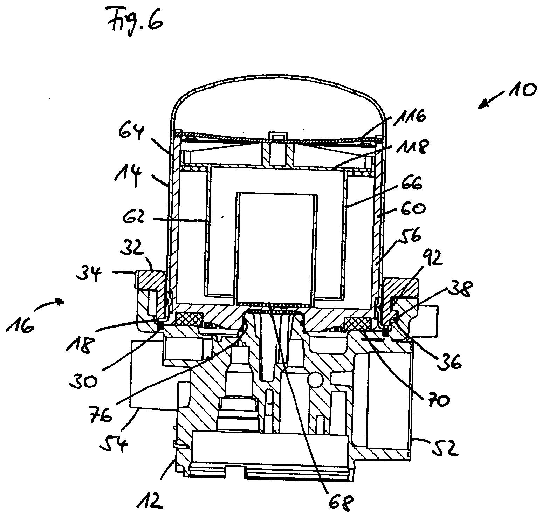

Figur 6 zeigt eine Ausführungsform einer Druckluftversorgungseinrichtung in geschnittener Darstellung. Anders als bei der bisher beschriebenen Ausführungsform enthält der die Lufttrocknerpatrone 14 mit dem Ventilgehäuse 12 verbindende Bajonettverschluss 16 einen Innenbajonettring 32. Der Innenbajonettring 32 ist über die Lufttrocknerpatrone 14 geführt und über Rastnasen 90 an der Innenfläche des Innenbajonettrings 32 und entsprechende Ausnehmungen 88 am Gehäuse 64 der Lufttrocknerpatrone gegen diese verdrehgesichert. Der Innenbajonettring 32 hat einen sich nach außen erstreckenden Kragen 34 und dazu axial versetzte, sich nach außen erstreckende Vorsprünge 36. Die Vorsprünge 36 weisen Schrägen auf, die in Ausnehmungen 38 eines teilweise außerhalb des Innenbajonettrings 32 liegenden Teils des Ventilgehäuses 12 eingreifen, um mit dem die Ausnehmungen 38 einseitig begrenzenden sich radial nach innen erstreckenden Vorsprüngen 92 zusammenzuwirken. Zu diesem Zweck weisen die Vorsprünge 92 ebenfalls Schrägen auf, die eine kraftschlüssige Verbindung zwischen den Vorsprüngen 92 des Ventilgehäuses 12 und den Vorsprüngen 36 des Innenbajonettrings 32 durch eine relative Drehung von Innenbajonettring 32 und Ventilgehäuse 12 zur Verfügung stellt. Durch das Verschließen des Bajonettverschlusses 16 entsteht eine axial wirkende Kraft, die über den Kragen 18 der Lufttrocknerpatrone 14 auf eine Dichtung 30 wirkt; diese Dichtung wirkt andererseits mit dem Ventilgehäuse 12 zusammen. Eine weitere Dichtung 76 ist als Radialdichtung ausgebildet, d. h. insbesondere als O-Ring. Sie dichtet das Ventilgehäuse 12 gegen die vorzugsweise aus Kunststoff bestehende Trockenmittelbox 56 ab.

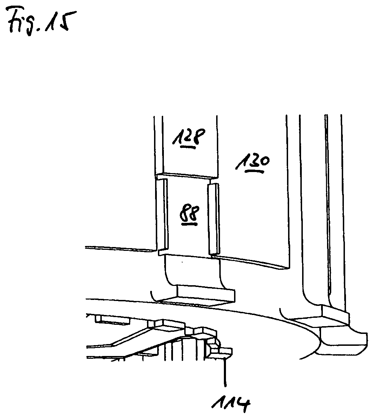

Mit dem so aufgebauten und gedichteten System ist wiederum eine effiziente und effektive Lufttrocknung möglich, indem über den Eingang 52 des Ventilgehäuses 12 Druckluft einströmt, sich über Luftkanäle im Ventilgehäuse 12 verteilt und über einen vorzugsweise als Koaleszenzfilter ausgebildeten Vorfilter 70 in die Lufttrocknerpatrone 14 bzw. die darin angeordnete Trockenmittelbox 56 strömt. Die Trockenmittelbox 56 umfasst wiederum ein äußeres nach oben offenes Rohrstück 60 und ein inneres nach oben geöffnetes Rohrstück 62 auf. Zwischen dem äußeren Rohrstück 60 und dem inneren Rohrstück 62 ist ein weiteres Rohrstück 66 angeordnet, das nach unten offen ist und vorzugsweise aus Metall besteht. Dieses metallische Rohrstück 66 wird von einer Kompressionseinrichtung 118 gehalten, die von einer Federeinrichtung 116 mit Kraft beaufschlagt wird. Durch diese Federkraft wird das in der Trockenmittelbox vorgesehene als Trockenmittel wirkende Granulat dicht gepackt. Die aus dem Vorfilter 70 ausströmende Luft strömt außerhalb des äußeren Rohrstückes 60, d. h. zwischen dem äußeren Rohrstück 60 und dem Gehäuse 64 der Lufttrocknerpatrone 14 durch nicht dargestellte axiale Kanäle, die zwischen den zu erkennenden Anlagebereichen der Trockenmittelbox 56 angeordnet sind, nach oben. Zur weiteren Veranschaulichung dieser Luftführungen wird auf Figur 15 hingewiesen. Die Luft umströmt das offene Ende des äußeren Rohrstücks 60, tritt in den trockenmittelfreien Raum oberhalb der Kompressionseinrichtung 118 ein und strömt nachfolgend zwischen dem nach unten geöffneten Rohrstück 66 und dem äußeren Rohrstück 60 nach unten, um dann wiederum seine Strömungsrichtung umzukehren und zwischen dem inneren Rohrstück 62 und dem nach unten geöffneten Rohrstück 66 nach oben zu strömen. Nach nochmaliger Strömungsumkehr strömt die zu trocknende Luft dann in das innere Rohrstück 62 ein, um dieses dann nach unten durch einen als Staubfilter wirkenden Filtervlies 68 in das Ventilgehäuse 12 zu verlassen. Getrocknete Luft wird dann über den Ausgang 54 abgeführt.

Die Trockenmittelbox 56 und der freie Bereich zwischen Trockenmittelbox 56 und Gehäuse 64 sind vollständig mit Granulat gefüllt. Dieses kann einheitlich ausgebildet sein. Besonders nützlich kann auch sein, verschiedene Arten von Trockenmittel in die Trockenmittelbox 56 einzubringen. So kann das anfänglich durchströmte Trockenmittel für eher feuchte Luft optimiert sein, während das Trockenmittel im Ausströmbereich für die Restentfeuchtung schon vorgetrockneter Luft optimiert ist.

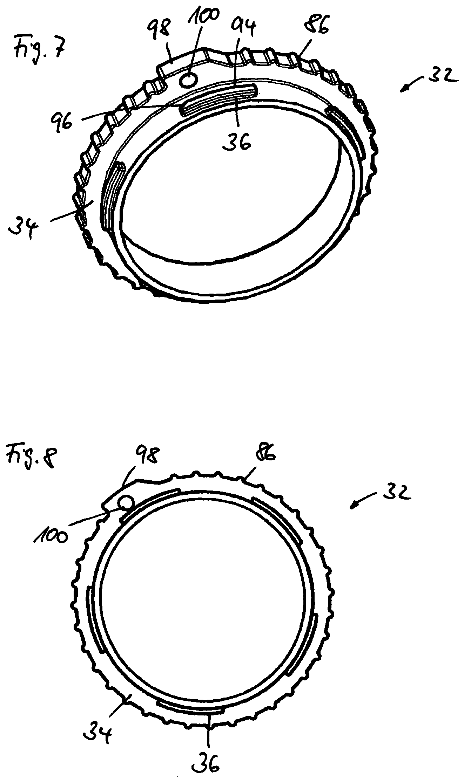

Figur 7 zeigt eine perspektivische Darstellung eines Innenbajonettrings. Figur 8 zeigt eine Draufsicht eines Innenbajonettrings. Der Innenbajonettring 32 hat eine gewellte äußere Oberfläche 86, was die Handhabbarkeit beim Verdrehen des Innenbajonettrings 32 verbessert. Die gewellte äußere Oberfläche ist am nach außen gerichteten Kragen 34 des Innenbajonettrings 32 angeordnet. Axial versetzt zum Kragen 34 sind Vorsprünge 36 vorgesehen, die ebenfalls nach außen gerichtet sind, und die für die Bajonettfunktion erforderliche Neigung der dem Kragen 34 zugewandten Oberfläche 94 aufweisen. Diese Neigung kann beispielsweise 1,5° betragen. Zur Erleichterung der anfänglichen Drehbewegung beim Verschließen des Bajonettverschlusses sind Anlaufschrägen 96 vorgesehen, die eine deutlich größere Neigung aufweisen, beispielsweise 30°. Die Vorsprünge 36 können vorteilhafterweise einen Anschlag aufweisen, um die Schließbewegung des Bajonettverschlusses zu begrenzen. An einem Ansatz 98 am Kragen 34 ist eine axiale Bohrung 100 zu erkennen, die zur Aufnahme des im Zusammenhang mit Figur 3 detailliert beschriebenen Sicherungselementes 42 aufweist. Bei der Anwendung sitzt das Sicherungselement 42 fest in dieser Bohrung 100, um mit seiner Nase dann in eine das Abströmen von, Druckluft aus der Druckluftversorgungseinrichtung 10 ermöglichende Bohrung im Ventilgehäuse 12 einzurasten. Somit wird auch im Zusammenhang mit der Innenbajonettlösung die vorteilhafte Kombination aus Druckluftablasseinrichtung und Rasteinrichtung zur Verfügung gestellt.

Die im Zusammenhang mit den Figuren 1 bis 8 beschriebenen Ausführungsformen der vorliegenden Erfindung enthalten Lufttrocknerpatronen die als offene Systeme ausgelegt sind. Dies bedeutet, dass die Lufttrocknerpatrone direkt am Ventilgehäuse über eine Dichtung abdichtet, das heißt insbesondere ohne zwischengelagerten Flansch.

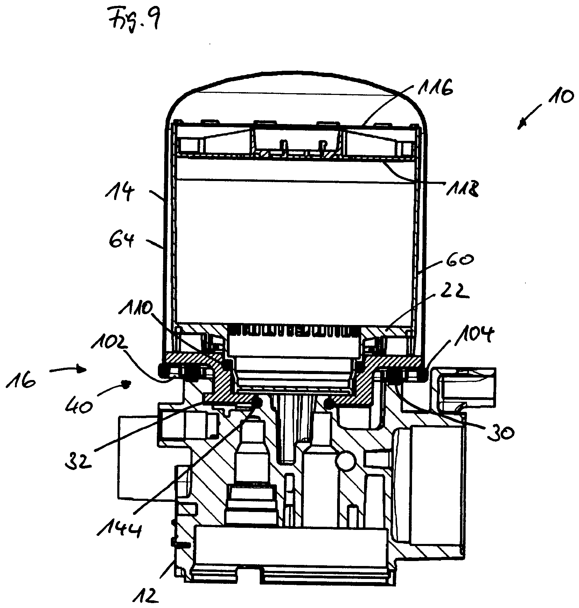

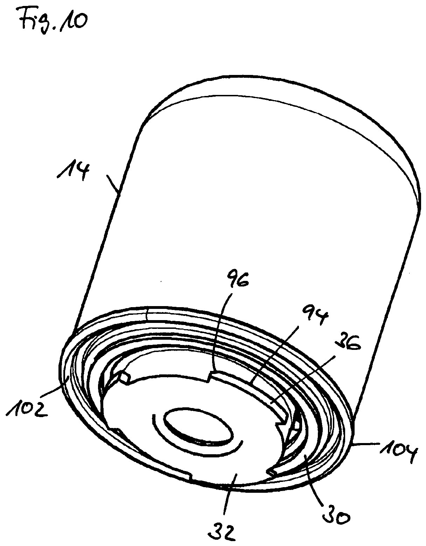

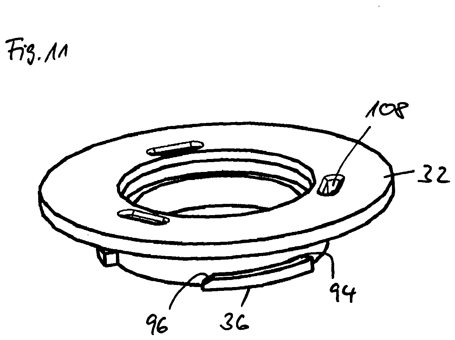

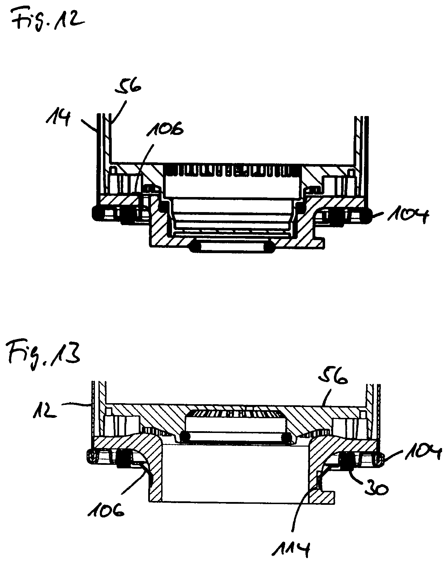

Figur 9 zeigt eine Ausführungsform einer Druckluftversorgungseinrichtung in geschnittener Darstellung. Figur 10 zeigt eine perspektivische Darstellung einer Lufttrocknerpatrone mit Fußflansch und Innenbajonettring. Figur 11 zeigt eine perspektivische Darstellung eines Innenbajonettrings mit Fußflanschfunktion. Figur 12 zeigt eine Schnittansicht eines Teils einer erfindungsgemäßen Druckluftversorgungseinrichtung zur Erläuterung einer ersten Montageart eines Fußflansches und Figur 13 zeigt eine Schnittansicht eines Teils einer erfindungsgemäßen Druckluftversorgungseinrichtung zur Erläuterung einer zweiten Montageart eines Fußflansches. Das in diesen Figuren dargestellte System enthält eine geschlossene Lufttrocknerpatrone 14. Von geschlossenen Lufttrocknerpatronen 14 ist die Rede, wenn deren Gehäuse 64 nicht direkt am Ventilgehäuse 12 abdichtet, sondern ein Fußflansch 40 vorgesehen ist. Der Fußflansch 40 ist mit einem Innenbajonettring 32 kombiniert, der im Hinblick auf seine die Bajonettwirkung zur Verfügung stellende Ausgestaltung mit dem im Zusammenhang mit den Figuren 6 bis 8 beschriebenen Innenbajonettring vergleichbar. Ebenso weist das Ventilgehäuse 12 bezogen auf den Bajonettverschluss 16 eine vergleichbare Ausgestaltung auf, wie das im Zusammenhang mit Figur 6 beschriebene Ventilgehäuse 12. Der Innenbajonettring 32 ist über einen Deckel 102 mit dem Gehäuse 64 der Lufttrocknerpatrone 14 verbunden. Die Verbindung des Deckels 102 mit dem Gehäuse 64 der Lufttrocknerpatrone erfolgt über einen Bördelrand 104. Der Fußflansch 40 wirkt über eine Dichtung 30, die an dem Deckel 102 anliegt, mit dem Ventilgehäuse 12 zusammen, wobei die abdichtende Kraft in axiale Richtung wirkt. Eine weitere radial wirkende Dichtung 144 ist zwischen dem Ventilgehäuse 12 und dem Innenbajonettring 32 vorgesehen. Ebenfalls ist eine Radialdichtung 110 zwischen der Trockenmittelbox 56 und dem Innenbajonettring 32 angeordnet. Das so aufgebaute und abgedichtete System ermöglicht ein Einströmen von Druckluft in den Eingang 52, eine Überleitung der Druckluft in den Bereich zwischen der Trockenmittelbox 56 und dem Gehäuse 64 der Lufttrocknerpatrone 14, eine Umlenkung der Luft in den zentralen mit Trockenmittel gefüllten Bereich 112 der Trockenmittelbox 56 und ein nachfolgendes Abströmen der getrockneten Luft aus der Lufttrocknerpatrone 14 in das Ventilgehäuse 12, aus dem die getrocknete Luft dann über den Ausgang 54 entnommen werden kann. Die Kompression des in der Trockenmittelbox 56 vorhandenen Trockenmittels erfolgt über eine eine Kompressionseinrichtung 118 beaufschlagende Federeinrichtung.

Gemäß den Figuren 11 und 12 erfolgt die Verbindung des Deckels 102 mit dem Innenbajonettring 32 durch das Eingreifen von Laschen 106 in dafür im Innenbajonettring 32 vorgesehene Öffnungen 108 zur Verfügung gestellt.

Im Hinblick auf die Befestigung des Deckels 102 am Innenbajonettring 32 zeigt Figur 13 eine Variante. Hier greifen Laschen 106 nicht in Öffnungen 108 des Innenbajonettrings 32 ein. Vielmehr liegen diese in Nuten 114 des Innenbajonettrings 32. Diese Nuten 114 sind am Umfang des Innenbajonettringes so angeordnet, dass sie nicht mit den für die Bajonettfunktion erforderlichen Vorsprüngen interferieren.

Die Trockenmittelbox 56 gemäß Figur 9 hat einen grundsätzlich anderen Aufbau als die im Zusammenhang mit den Figuren 1, 2 und 6 beschriebenen Trockenmittelboxen 56. Während letztere ein viergängiges Labyrinth bilden, hat die Trockenmittelbox 56 gemäß Figur 9 keinen solchen labyrinthartigen Aufbau. Es ist zu bemerken, dass das geschlossene System gemäß Figur 9 ohne weiteres ebenfalls mit einer Trockenmittelbox 56 mit labyrinthartigen Aufbau, wie dieser in den Figuren 1, 2 und 6 gezeigt ist, kombinierbar ist. Gleiches gilt umgekehrt, denn für die offenen System gemäß den Figuren 1, 2 und 6 ist die Verwendung labyrinthartiger Trockenmittelboxen nicht zwingend.

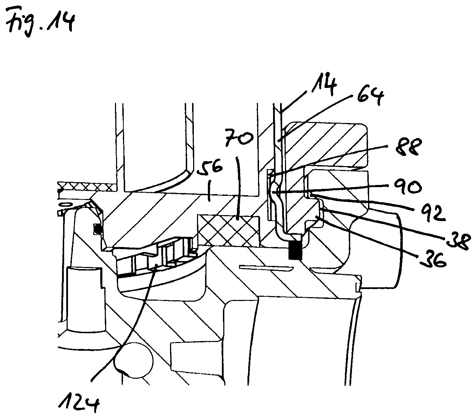

Figur 14 zeigt einen Teil einer erfindungsgemäßen Druckluftversorgungseinrichtung in geschnittener Darstellung. In dieser Darstellung ist die Verbindung zwischen dem Gehäuse 64 der Lufttrocknerpatrone 14 und der Trockenmittelbox 56 deutlich zu erkennen. Eine Rastnase 90 ist in einer Ausnehmung 88 angeordnet. Weiterhin sind Halter 124 zum Halten des Vorfilters 70 gezeigt.

Figur 15 zeigt einen Teil einer Trockenmittelbox 56 in perspektivischer Darstellung. Hier sind die Ausnehmungen 88 sowie die Halter 124 ebenfalls zu erkennen. Weiterhin erkennt man Bereiche 128, die gegenüber benachbarten Bereichen 130 einen vergrößerten Durchmesser aufweisen. Die Bereiche 128 liegen bei in das Gehäuse 64 der Lufttrocknerpatrone 14 eingesetzter Trockenmittelbox 56 an dem Gehäuse 64 an. Die Bereiche 130 dienen dann als Kanäle, um die Druckluft beim Einströmen in die Lufttrocknerpatrone 14 nach oben zu leiten.

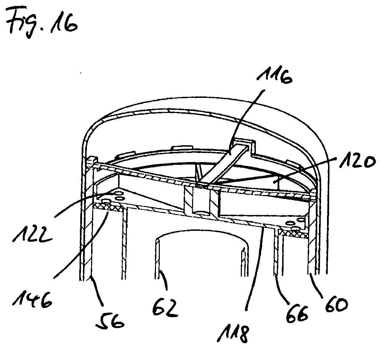

In Figur 16 zeigt eine perspektivische geschnittene Darstellung eines Teils einer Lufttrocknerpatrone. Eine Federeinrichtung 116 ist an der Trockenmittelbox 56 befestigt, wobei die Verbindung vorzugsweise spritztechnisch realisiert ist. Die Federeinrichtung 116 besteht aus zwei sich kreuzenden federnden Elementen, die in der Mitte der Anordnung miteinander verbunden sind. Dort beaufschlagen sie eine Kompressionseinrichtung 118 nach unten mit Kraft, um diese so in die Trockenmittelbox 56 hinein zu treiben. Alternativ könnte eine beispielsweise zent-ral angeordnete Spiralfeder vorgesehen sein, die sich am Gehäuse 64 der Lufttrocknerpatrone 14 abstützt. Die Kompressionseinrichtung 118 ist durch eine Mehrzahl von Stegen 120 stabilisiert, und sie weist Durchgangslöcher 122 auf, die einen Übertritt der oberhalb der Kompressionseinrichtung 118 anwesenden Luft in den Kanal zwischen dem äußeren Rohrstück 60, welches Bestandteil der Trockenmittelbox 56 ist, und dem Rohrstück 66 zu erlauben, das mit der Kompressionseinrichtung 118 in Verbindung steht. In diesem Kanal ist eingangsseitig ein Filter 146 angeordnet, das von der Luft bei ihrem Eintritt in den Kanal durchströmt wird.

Figur 17 zeigt eine Trockenmittelbox 56 in perspektivischer Darstellung. Diese Trockenmittelbox 56 kann beispielsweise bei den im Zusammenhang mit der anhand der Figuren 1 und 2 beschriebenen Ausführungsform der erfindungsgemäßen Druckluftversorgungseinrichtung 10 zum Einsatz kommen. In der zentralen Öffnung 132 der Trockenmittelbox 56 kann die in Figur 1 dargestellte Feder 58 eindringen, um die Trockenmittelbox 56 in Richtung der Lufttrocknerpatrone 14 mit Kraft zu beaufschlagen. Am Umfang der Trockenmittelbox 56 sind mehrere Federlaschen 134 angeordnet, die sich in das Gehäuse 64 der Lufttrocknerpatrone 14 einkrallen, und so ebenfalls eine axial nach oben gerichtete Kraft auf die Trockenmittelbox 56 ausüben. Bei geeigneter Auslegung der Federlaschen 134 kann auf die in die Öffnung 132 eindringende Feder 58 unter Umständen verzichtet werden, was den Zusammenbau der Druckluftversorgungseinrichtung 10 erleichtert. Im Bereich des Umfangs der Trockenmittelbox 56 ist eine Vielzahl von Öffnungen 136 vorgesehen, über die die Druckluft in das Trockenmittel einströmt. Innerhalb der Öffnung 132 ist eine Mehrzahl von Öffnungen 142 erkennbar, durch die Druckluft aus der Trockenmittelbox 56 ausströmen kann. Es sind weiterhin Halter 124 zum Halten des Vorfilters 70 zu erkennen. Weiter innen sind Rückschlagventile 138 angeordnet, über die die Trockenmittelbox gespült werden kann. Die Rückschlagventile liegen direkt unterhalb von dem mit Trockenmittel gefüllten Bereich, wobei vorzugsweise ein Filtervlies 68 die Rückschlagventile 138 gegen das Trockenmittel abschirmt. Die Trockenmittelbox 56 weist weiterhin eine Öffnung 140 auf. In diese Öffnung 140 dringt beim Aufsetzen der Lufttrocknerpatrone 14 auf das Ventilgehäuse 12 ein mit dem Ventilgehäuse in Verbindung stehender Zapfen ein. Dieser Zapfen dient zur Vorzentrierung der Lufttrocknerpatrone 14 relativ zum Ventilgehäuse 12 und zur Verdrehsicherung der Komponeten gegeneinander. Der Zapfen am Ventilgehäuse hat vorzugsweise eine solche Länge, dass dieser bei der Montage der Lufttrocknerpatrone 14 den ersten Kontakt zwischen dem Ventilgehäuse 12 und der Lufttrocknerpatrone 14 zur Verfügung stellt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Druckluftversorgungseinrichtung
- 12: Ventilgehäuse
- 14: Lufttrocknerpatrone
- 16: Bajonettverschluss
- 18: Kragen
- 20: Kragenabschnitt
- 22: Basis
- 24: Außenbajonettring
- 28: Ausnehmung
- 30: Dichtung
- 32: Innenbajonettring
- 34: Kragen
- 36: Vorsprung
- 38: Ausnehmung
- 40: Fußflansch
- 42: Sicherungselement
- 44: Öffnung
- 46: Öffnung
- 48: Nase
- 50: Feder
- 52: Eingang
- 54: Ausgang
- 56: Trockenmittelbox
- 58: Feder
- 60: äußeres Rohrstück
- 62: inneres Rohrstück
- 64: Gehäuse
- 66: Rohrstück
- 68: Filtervlies
- 70: Vorfilter
- 72: Kanal
- 74: Kanal
- 76: Dichtung
- 78: Kragen
- 80: Vorsprung
- 82: Dichtung
- 84: Sicherungselementhalter
- 86: gewellte Oberfläche
- 88: Ausnehmung
- 90: Rastnase
- 92: Vorsprung
- 94: Oberfläche
- 96: Anlaufschräge
- 98: Ansatz
- 100: Bohrung
- 102: Deckel
- 104: Bördelrand
- 106: Lasche
- 108: Öffnung
- 110: Radialdichtung
- 112: Trockenmittelbereich
- 114: Nut
- 116: Federeinrichtung
- 118: Kompressionseinrichtung
- 120: Steg
- 122: Durchgangsloch
- 124: Halter
- 128: Bereich
- 130: Bereich
- 132: Öffnung
- 134: Federlasche
- 136: Öffnung
- 138: Rückschlagventil
- 140: Öffnung
- 142: Öffnung
- 144: Dichtung
- 146: Filter

## Patentansprüche

1. Druckluftversorgungseinrichtung (10) für ein Nutzfahrzeug, mit einem Ventilgehäuse (12) und einer Lufttrocknerpatrone (14), welche ein Gehäuse (64) aufweist, wobei in dem Gehäuse (64) der Lufttrocknerpatrone (14) eine mit Trockenmittel gefüllte Trockenmittelbox (56) angeordnet ist und dass das Trockenmittel durch eine elastische Einrichtung (58, 116, 134) komprimierbar ist, **dadurch gekennzeichnet, dass** die elastische Einrichtung durch mehrere an der Trockenmittelbox (56) befestigte Federelemente (134) realisiert ist, welche sich an einem Gehäuse (64) der Lufttrocknerpatrone (14) abstützen und die Trockenmittelbox in die Lufttrocknerpatrone hineintreiben.

2. Druckluftversorgungseinrichtung nach Anspruch 1, **dadurch gekennzeichnet, dass** die Trockenmittelbox (56) eine Basis (22) aufweist, an der ein äußeres Rohrstück (60) und ein inneres Rohrstück (62) angeordnet sind, die an ihrer der Basis (22) abgewandten Seite offen sind, und dass zwischen dem äußeren Rohrstück und dem inneren Rohrstück ein weiteres Rohrstück (66) angeordnet ist, welches an seiner der Basis zugewandten Seite offen und durch die elastische Einrichtung (58, 116, 134) relativ zu der Trockenmittelbox in axiale Richtung verschiebbar ist.

3. Druckluftversorgungseinrichtung nach Anspruch 2, **dadurch gekennzeichnet, dass** das Gehäuse (64) der Lufttrocknerpatrone (14), das äußere Rohrstück (60), das weitere Rohrstück (66) und das innere Rohrstück (62) ein Labyrinth bilden, das von zu trocknender Druckluft unter dreifacher Umkehr der Strömungsrichtung durchströmbar ist.

4. Druckluftversorgungseinrichtung nach Anspruch 2 oder 3, **dadurch gekennzeichnet, dass** das weitere Rohrstück (66) an dem Gehäuse (64) der Lufttrocknerpatrone (14) befestigt ist.

5. Druckluftversorgungseinrichtung nach Anspruch 2 oder 3, **dadurch gekennzeichnet, dass** das weitere Rohrstück (66) an der Kompressionseinrichtung (118) befestigt ist.

6. Druckluftversorgungseinrichtung nach Anspruch 1, **dadurch gekennzeichnet, dass** die Trockenmittelbox (56) eine Basis (22) aufweist, an der ein Rohrstück (60) angeordnet ist, das an seiner der Basis abgewandten Seite offen ist, und dass die Kompressionseinrichtung (118) innerhalb des Rohrstückes angeordnet und durch die elastische Einrichtung (116) relativ zu der Trockenmittelbox in axiale Richtung verschiebbar ist.

7. Druckluftversorgungseinrichtung nach einem der vorhergehenden Ansprüche, **dadurch gekennzeichnet, dass** die Trockenmittelbox (56) mit dem Ventilgehäuse (12) über eine radiale Dichtung (76) abdichtend zusammenwirkt.

8. Druckluftversorgungseinrichtung nach einem der vorhergehenden Ansprüche, **dadurch gekennzeichnet, dass** die Trockenmittelbox mit einem Fußflansch (40) der Lufttrocknerpatrone (76) über eine radiale Dichtung (110) abdichtend zusammenwirkt.

9. Druckluftversorgungseinrichtung nach einem der vorhergehenden Ansprüche, **dadurch gekennzeichnet, dass** die Trockenmittelbox (56) mit dem Gehäuse (64) der Lufttrocknerpatrone (14)über eine eine axiale Relativbewegung von Trockenmittelbox und Gehäuse zulassende Rasteinrichtung (88, 90) verbunden ist.

10. Lufttrocknerpatrone (14) mit einem Gehäuse (64) und darin vorgesehenem Trockenmittel, für eine Druckluftversorgungseinrichtung (10) nach einem der vorangehenden Ansprüche, wobei in dem Gehäuse (64) eine mit Trockenmittel gefüllte Trockenmittelbox (56) angeordnet ist und dass das Trockenmittel durch eine elastische Einrichtung (58, 116, 134) komprimierbar ist **dadurch gekennzeichnet, dass** die elastische Einrichtung durch mehrere an der Trockenmittelbox (56) befestigte Federelemente (134) realisiert ist, welche sich an einem Gehäuse (64) der Lufttrocknerpatrone (14) abstützen und die Trockenmittelbox in die Lufttrocknerpatrone hineintreiben.

## Claims

1. Compressed air supply device (10) for a utility vehicle, having a valve housing (12) and having an air dryer cartridge (14) which has a housing (64), wherein a drying agent box (56) which is filled with drying agent is arranged in the housing (64) of the air dryer cartridge (14) and wherein the drying agent can be compressed by means of an elastic device (58, 116, 134), **characterized in that** the elastic device is realized by means of a plurality of spring elements (134) which are fastened to the drying agent box (56) and which are supported on a housing (64) of the air dryer cartridge (14) and drive the drying agent box into the air dryer cartridge.

2. Compressed air supply device according to Claim 1, **characterized in that** the drying agent box (56) has a base (22) on which are arranged an outer tube piece (60) and an inner tube piece (62) which are open at their side facing away from the base (22), and **in that** a further tube piece (66) is arranged between the outer tube piece and the inner tube piece, which further tube piece is open at its side facing toward the base and can be moved in the axial direction relative to the drying agent box by means of the elastic device (58, 116, 134).

3. Compressed air supply device according to Claim 2, **characterized in that** the housing (64) of the air dryer cartridge (14), the outer tube piece (60), the further tube piece (66) and the inner tube piece (62) form a labyrinth through which compressed air to be dried can flow whilst undergoing three reversals in flow direction.

4. Compressed air supply device according to Claim 2 or 3, **characterized in that** the further tube piece (66) is fastened to the housing (64) of the air dryer cartridge (14).

5. Compressed air supply device according to Claim 2 or 3, **characterized in that** the further tube piece (66) is fastened to the compression device (118).

6. Compressed air supply device according to Claim 1, **characterized in that** the drying agent box (56) has a base (22) on which is arranged a tube piece (60) which is open at its side facing away from the base, and **in that** the compression device (118) is arranged within the tube piece and can be moved in the axial direction relative to the drying agent box by means of the elastic device (116).

7. Compressed air supply device according to one of the preceding claims, **characterized in that** the drying agent box (56) interacts in a sealing fashion with the valve housing (12) by means of a radial seal (76).

8. Compressed air supply device according to one of the preceding claims, **characterized in that** the drying agent box interacts in a sealing fashion with a foot flange (40) of the air dryer cartridge (76) by means of a radial seal (110).

9. Compressed air supply device according to one of the preceding claims, **characterized in that** the drying agent box (56) is connected to the housing (64) of the air dryer cartridge (14) by means of a latching device (88, 90) which enables an axial relative movement of the drying agent box and housing.

10. Air dryer cartridge (14) having a housing (64) and having drying agent provided therein, for a compressed air supply device (10) according to one of the preceding claims, wherein a drying agent box (56) which is filled with drying agent is arranged in the housing (64) and wherein the drying agent can be compressed by means of an elastic device (58, 116, 134) **characterized in that** the elastic device is realized by means of a plurality of spring elements (134) which are fastened to the drying agent box (56) and which are supported on a housing (64) of the air dryer cartridge (14) and drive the drying agent box into the air dryer cartridge.

## Revendications

1. Dispositif (10) d'alimentation en air comprimé pour un véhicule utilitaire, comprenant un corps (12) de soupape et une cartouche (14) de sécheur d'air, qui a un boîtier (64), dans lequel, dans le boîtier (64) de la cartouche (14) de sécheur d'air, est disposée une boîte (56) à agent déshydratant emplie d'agent déshydratant et en ce que l'agent déshydratant peut être comprimé par un dispositif (58, 116, 134) élastique, **caractérisé en ce que** le dispositif élastique est réalisé par plusieurs éléments (134) de ressort, qui sont fixés à la boîte (56) à agent déshydratant, qui s'appuient sur un boîtier (64) de la cartouche (14) de sécheur d'air et qui poussent la boîte à agent déshydratant dans la cartouche de sécheur d'air.

2. Dispositif d'alimentation en air comprimé suivant la revendication 1, **caractérisé en ce que** la boîte (56) à agent déshydratant a une base (22) sur laquelle sont montées une pièce (60) tubulaire extérieure et une pièce (62) tubulaire intérieure, qui sont ouvertes du côté, loin de la base (22), et **en ce que**, entre la pièce tubulaire extérieure et la pièce tubulaire intérieure, est disposée une autre pièce (66) tubulaire, qui est ouverte du côté tourné vers la base et qui peut coulisser dans la direction axiale par rapport à la boîte à agent déshydratant par le dispositif (58, 116, 134) élastique.

3. Dispositif d'alimentation en air comprimé suivant la revendication 2, **caractérisé en ce que** le boîtier (64) de la cartouche (14) de sécheur d'air, la pièce (60) tubulaire extérieure, l'autre pièce (66) tubulaire et la pièce (62) tubulaire intérieure forment un labyrinthe dans lequel passe de l'air comprimé à sécher avec triple inversion du sens de passage.

4. Dispositif d'alimentation en air comprimé suivant la revendication 2 ou 3, **caractérisé en ce que** l'autre pièce (66) tubulaire est fixée au boîtier (64) de la cartouche (14) de sécheur d'air.

5. Dispositif d'alimentation en air comprimé suivant la revendication 2 ou 3, **caractérisé en ce que** l'autre pièce (66) tubulaire est fixée à un dispositif (118) de compression.

6. Dispositif d'alimentation en air comprimé suivant la revendication 1, **caractérisé en ce que** la boîte (56) à agent déshydratant a une base (22) sur laquelle est montée une pièce (60) tubulaire, qui est ouverte du côté, loin de la base, et **en ce que** le dispositif (118) de compression est disposé à l'intérieur de la pièce tubulaire et peut coulisser dans la direction axiale par rapport à la boîte à agent déshydratant par le dispositif (116) élastique.

7. Dispositif d'alimentation en air comprimé suivant l'une des revendications précédentes, **caractérisé en ce que** la boîte (56) à agent déshydratant coopère avec le corps (12) de soupape à étanchéité par l'intermédiaire d'une étanchéité (76) radiale.

8. Dispositif d'alimentation en air comprimé suivant l'une des revendications précédentes, **caractérisé en ce que** la boîte à agent déshydratant coopère à étanchéité avec une bride (40) inférieure de la cartouche (76) de sécheur d'air par l'intermédiaire d'une étanchéité (110) radiale.

9. Dispositif d'alimentation en air comprimé suivant l'une des revendications précédentes, **caractérisé en ce que** la boîte (56) à agent déshydratant est reliée au boîtier (64) de la cartouche (14) de sécheur d'air par un dispositif (88, 90) d'encliquetage autorisant un mouvement axial relatif de la boîte à agent déshydratant et du boîtier (64).

10. Cartouche (14) de sécheur d'air, comprenant un boîtier (64) et un agent déshydratant prévu à l'intérieur pour un dispositif (10) d'alimentation en air comprimé suivant l'une des revendications précédentes, dans lequel une boîte (56) à agent déshydratant, emplie d'agent déshydratant, est disposée dans le boîtier (64) et en ce que l'agent déshydratant peut être comprimé par un dispositif (58, 116, 134) élastique, **caractérisée en ce que** le dispositif élastique est réalisé par plusieurs éléments (134) de ressort, qui sont fixés à la boîte (56) à agent déshydratant et qui s'appuient sur un boîtier (64) de la cartouche (14) de sécheur d'air, et qui poussent la boîte à agent déshydratant dans la cartouche de sécheur d'air.
